# FASCICULE DE BREVET EUROPEEN

(11) **EP 0 521 793 B1**
(45) Date de publication et mention de la délivrance du brevet: **14.09.1994**
(21) Numéro de dépôt: 92401905.2
(22) Date de dépôt: 03.07.1992
(51) Int. Cl.: B29C 67/18, B29C 65/00

(54) **Procédé d'assemblage de superstructures composites sur une coque métallique de navire**
Befestigungsverfahren von Verbundwerkstoffstrukturen mit einem metallenen Schiffsrumpf
Method for connecting composite superstructures to a metal ship hull

(30) Priorité: 05.07.1991 FR 9108439
(43) Date de publication de la demande: 07.01.1993
(73) Titulaire: ETAT-FRANCAIS représenté par le DELEGUE GENERAL POUR L'ARMEMENT (DPAG), F-00460 Paris Armées (FR)
(72) Inventeur: Le Lan, Jean-Yves, F-56270 Ploemeur (FR); Pluen, Robert, F-56270 Ploemeur (FR); Le Lann, Gilles, F-56270 Ploemeur (FR); Lagadec, Stéphane, F-56100 Lorient (FR); Marrec, Christian, F-56100 Lorient (FR)

(56) Documents cités:
- WO-A-85/03683
- CENTRAL PATENTS INDEX, BASIC ABSTRACTS JOURNAL Section PQ, Week 7747, Derwent Publications Ltd., London, GB; Class P64, AN 77-K4842Y
- PATENT ABSTRACTS OF JAPAN (M-495)4 Juillet 1986

## Description

L'invention concerne un procédé d'assemblage de structures métalliques et composites applicable notamment à l'assemblage de superstructures en matériaux composites sur une coque de navire métallique.

L'emploi des matériaux composites s'est généralisé depuis quelques années pour la réalisation d'éléments de structure utilisés par exemple dans la construction des superstructures de navires. Ces éléments de structure se présentent généralement sous la forme de matériaux composites de type sandwich ou de type monolithique. Il convient d'assembler ces éléments de structure par des moyens capables d'assurer la tenue mécanique lorsque le navire est soumis à des efforts généraux et locaux.

On connaît des procédés d'assemblage où les superstructures en matériaux composites sont assemblées par boulonnage sur la coque en acier. L'état de la technique s'est naturellement orienté vers ces procédés puisque le soudage direct des matériaux composites sur une structure métallique n'est pas réalisable. Cependant la résistance à la fatigue de l'assemblage par boulonnage est souvent limitée dans le cas de structures de grandes dimensions. De plus l'assemblage par boulonnage est source de reliefs inacceptables pour la signature équivalente radar dans le cas des applications militaires.

L'invention a pour but de supprimer les inconvénients de l'assemblage par boulonnage en proposant un procédé d'assemblage sur une coque métallique de navire de superstructures en matériaux composites qui combine l'insertion d'un bandeau métallique entre les couches des superstructures composites, et le soudage de ce bandeau à la coque métallique du navire.

L'invention offre ainsi la possibilité d'utiliser les matériaux composites pour la réalisation des superstructures en bénéficiant des avantages offerts par l'assemblage par soudage des éléments: résistance accrue en statique et fatigue (efforts alternés de la poutre navire), continuité de forme extérieure sans aspérité importante, possibilité de préfabrication des éléments composites par un chantier spécialisé et assemblage sur les lieux de construction par un personnel ne disposant que du savoir-faire d'un chantier de coques métalliques.

L'invention atteint son but grâce à un procédé d'assemblage sur une coque métallique de navire de superstructures en matériau composite du type sandwich ou du type monolithique, comportant une pluralité de couches fibres-résine dont deux couches extrêmes dites peau inférieure et peau supérieure, caractérisé en ce qu'un bandeau métallique est inséré par recouvrement entre les peaux inférieure et supérieure sur une partie de sa largeur, puis est soudé au niveau de la partie non recouverte sur la coque métallique de navire. Selon un mode de réalisation où le procédé est appliqué à des superstructures en matériau composite du type sandwich comportant une âme collée entre une peau inférieure et une peau supérieure, l'épaisseur de l'âme varie continûment depuis son épaisseur nominale jusqu'à l'épaisseur du bandeau métallique. Les faces inférieures de l'âme et du bandeau en contact avec la peau inférieure peuvent alors avantageusement être localement coplanaires au niveau de la jonction âme - bandeau.

Selon un mode de réalisation où le procédé est appliqué à des superstructures en matériau composite de type monolithique, l'épaisseur entre la peau inférieure et la peau supérieure peut varier continûment.

Le bandeau métallique peut être soudé sur un surbeau d'attente de la coque ou directement sur celle-ci.

D'autres caractéristiques et avantages de l'invention apparaîtront à la lecture suivante de la description détaillée d'un exemple de réalisation non limitatif de l'invention et au vu du dessin annexé sur lequel :
- La figure 1 représente une vue schématique en coupe transversale d'un navire illustrant l'application de l'invention à l'assemblage de superstructures composites sur une coque de navire métallique,
- la figure 2 est une vue agrandie du détail d'un assemblage de la structure de la figure 1,
- la figure 3 est une vue en perspective d'un élément de structure en matériau composite de type sandwich réalisé avec le procédé selon l'invention,
- la figure 4 est une vue en coupe d'un élément de structure réalisé avec le procédé selon l'invention et appliqué à une structure de type monolithique,
- la figure 5 est un premier exemple d'assemblage de la structure composite sur une structure métallique,
- la figure 6 est un deuxième exemple d'assemblage de la structure composite sur une structure métallique,
- la figure 7 est une vue en coupe d'une structure monolithique réalisée avec le procédé selon l'invention et présentant une variation continue de l'épaisseur entre les couches externes du stratifié.

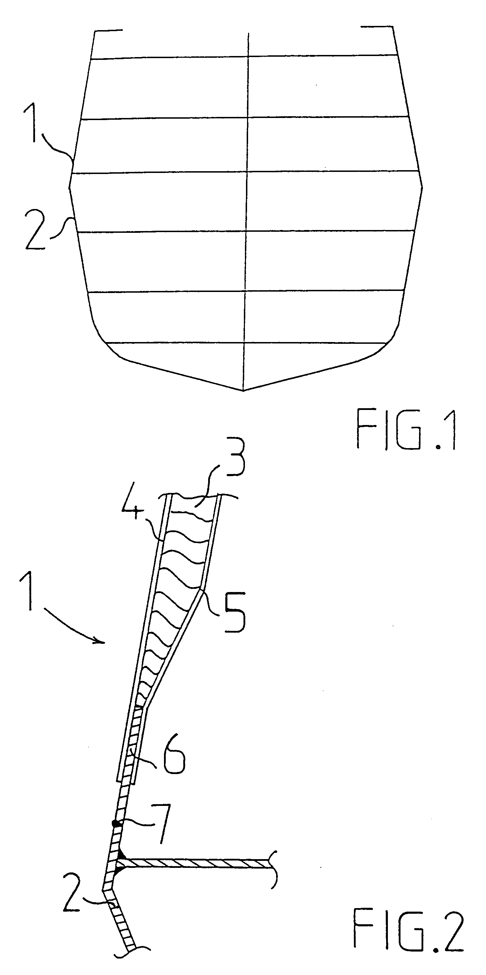

Sur la figure 1 on a représenté de façon schématique en coupe transversale un navire pour illustrer l'invention dans l'assemblage de superstructures composites 1 sur une coque métallique 2.

Il est important de noter que l'application du procédé selon l'invention à l'assemblage de superstructures composites sur une coque de navire métallique est donnée à titre d'illustration et que l'on peut fort bien concevoir d'autres applications du procédé dans le domaine du génie civil par exemple sans sortir du cadre de l'invention.

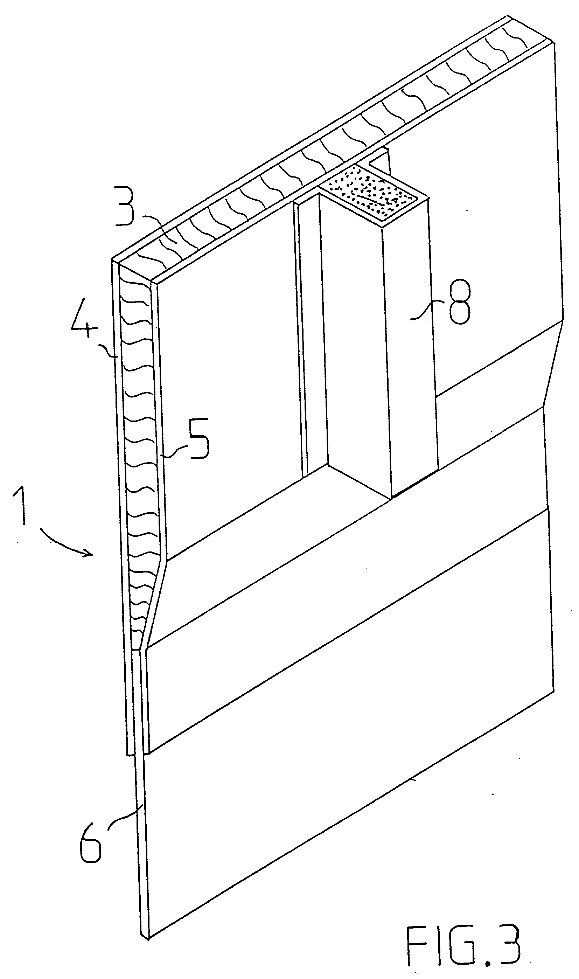

L'assemblage présenté de façon schématique sur la figure 1 est représenté en détail sur la figure 2 et l'élément de superstructure en matériau composite de type sandwich réalisé par l'étage d'insertion du procédé selon l'invention est représenté en perspective sur la figure 3. Sur les figures 2 et 3 on a désigné sous le signe de référence 3 l'âme collée en sandwich entre une pluralités de couches fibres-résine, comportant au moins une couche supérieure dite peau supérieure 5, et une couche inférieure dite peau inférieure 4. Les peaux 4 et 5 peuvent être avantageusement réalisées en fibre de verre ou de carbone imprégnée de résine et assurent la rigidité de la structure composite. On voit sur la figure 2 que l'épaisseur de l'âme 3 diminue progressivement jusqu'à atteindre l'épaisseur du bandeau métallique 6 qui la prolonge. Les peaux 4 et 5 recouvrent partiellement le bandeau 6 pour assurer la solidarisation de celui-ci avec la superstructure composite. La portion de bandeau recouverte doit être suffisante pour satisfaire à la tenue mécanique requise pour l'ensemble, et la partie dégagée du bandeau doit par ailleurs se prolonger suffisamment en dehors des peaux 4 et 5 pour ne pas endommager celles-ci par un échauffement excessif lors du soudage en 7 avec la structure métallique 2.

Selon un mode de réalisation de l'invention appliqué à une superstructure en matériau composite du type comportant une âme en balsa ou en mousse de polychhlorure de vinyle collée en sandwich entre une peau inférieure et une peau supérieure, la longueur de la partie du bandeau recouverte par les peaux 4 et 5 est approximativement égale à la longueur de la partie dégagée, et pour donner un ordre de grandeur, dans le cas où l'épaisseur de l'âme vaut 20 mm et celle du bandeau 9 mm, la longueur de la partie dégagée atteint 250 mm.

L'épaisseur de l'âme 3 variant continûment, la surface extérieure, dans le cas d'applications militaires, ne présente pas de relief inacceptable pour la signature équivalente radar. On a désigné par 8 une poutre composite stratifiée sur la peau supérieure 5 et visant à assurer une raideur supplémentaire à la structure.

Pour réaliser un élément de superstructure tel que présenté sur la figure 3, on commence par réaliser, sur une table, la peau inférieure 4. On positionne une cale démoulante en bout de panneau, sur laquelle on viendra poser le bandeau métallique 6, en recouvrant partiellement le stratifié.

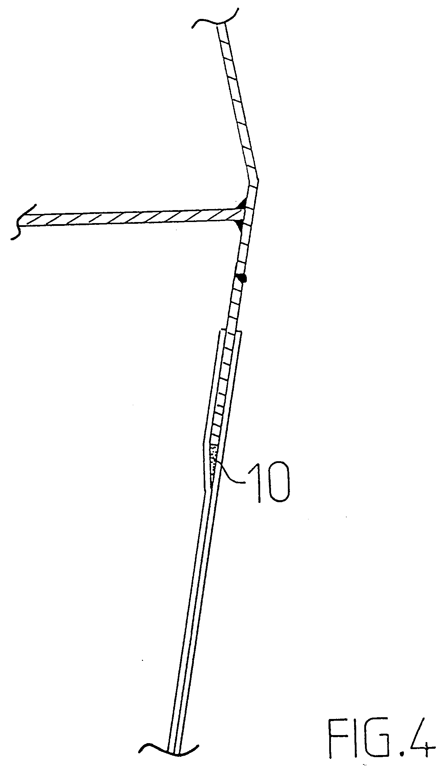

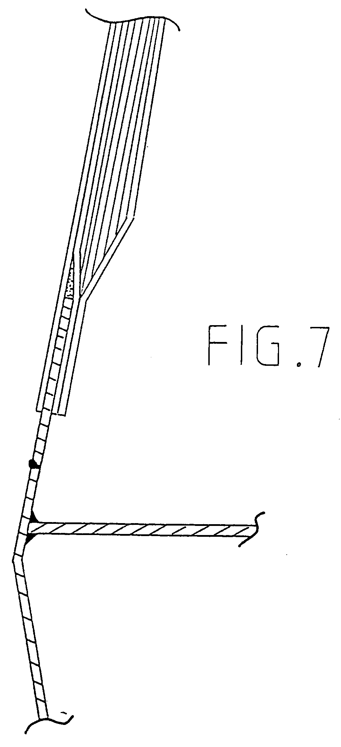

On vient alors coller sur la peau inférieure 4 l'âme 3 en la positionnant dans le prolongement du bandeau, comme montré sur la figure 3. Les faces de l'âme 3 et du bandeau 6 en contact avec la peau inférieure 4 sont alors coplanaires au niveau de la jonction âme - bandeau. Le collage est suivi d'un pressage par l'intermédiaire d'une poche à vide, ce qui assure une bonne évacuation des bulles d'air prises dans la résine et améliore le collage du bandeau et de l'âme. La face supérieure de l'âme est façonnée pour raccorder sans décrochement brutal les faces supérieures de l'âme et du bandeau. On procède ensuite à la stratification de la peau supérieure 5. Dans le cas d'un élément de superstructure du type monolithique tel que présenté sur la figure 4, on insert dans l'espace limité par les peaux 4 et 5 et le bord du bandeau un matériau de remplissage 10 pouvant avantageusement être constitué par de la mousse syntactique micro-billes de verre - résine. Le matériau de remplissage permet d'avoir une variation progressive de l'épaisseur du composite. La superstructure monolithique peut également présenter une variation continue de l'épaisseur comprise entre les couches externes, comme cela est montré sur la figure 7.

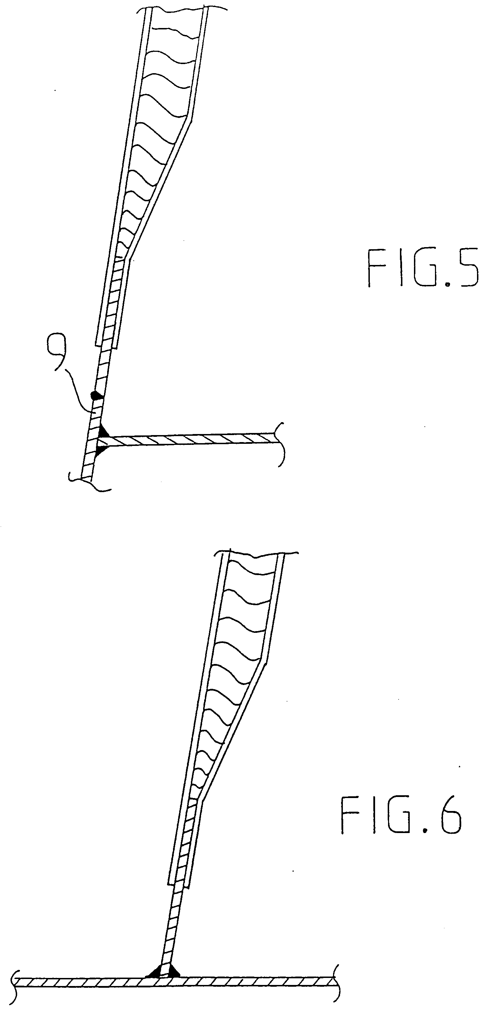

L'élément de superstructure ainsi obtenu est alors fixé par soudage du bandeau sur une structure métallique, sur un surbeau d'attente tel que montré à la figure 5 ou directement sur la coque comme montré sur la figure 6.

On obtient ainsi par combinaison de l'insertion et du soudage une liaison extérieure linéaire continue.

## Revendications

1. Procédé d'assemblage sur une coque métallique de navire (2) de superstructures en matériau composite (1) du type sandwich ou du type monolithique, comportant une pluralité de couches fibres-résine dont deux couches extrêmes dites peau inférieure (4) et peau supérieure (5), caractérisé en ce qu'un bandeau métallique (6) est inséré par recouvrement entre les peaux inférieure (4) et supérieure (5) sur une partie de sa largeur, puis est soudé au niveau de la partie non recouverte sur la coque métallique de navire (2).

2. Procédé selon la revendication 1, appliqué à des superstructures en matériau composite du type sandwich comportant une âme (3) collée entre une peau inférieure (4) et une peau supérieure (5), caractérisé en ce que l'épaisseur de l'âme varie continûment depuis son épaisseur nominale jusqu'à l'épaisseur du bandeau métallique.

3. Procédé selon la revendication 2, caractérisé en ce que les faces inférieures de l'âme (3) et du bandeau (6) en contact avec la peau inférieure (4) sont localement coplanaires au niveau de la jonction âme - bandeau.

4. Procédé selon la revendication 1, appliqué à des superstructures en matériau composite du type monolithique, caractérisé en ce que l'épaisseur entre la peau inférieure (4) et la peau supérieure (5) varie continûment.

5. Procédé selon la revendication 1, caractérisé en ce que le bandeau métallique (6) est soudé sur un surbeau d'attente (9) de la coque (2).

## Claims

1. A process of insertion of a metal strip in a composite material structure of sandwich or monolithic type, comprising several fibre-resin layers with at least two extreme layers as lower skin (4) and other higher skin (5), characterized in that a metal strip (6) is insered by overlapping between said lower and higher skin (4) (5) partially on its width, and then is welded on a level with the part uncovered on the ship hull (2).

2. A process according to claim 1, applied to a composite material structure of the sandwich type comprising a core (3) bonded between a lower skin (4) and higher skin (5), characterized in that the core thickness continuously varies from its nominal thickness to the metal strip thickness.

3. A process according to claim 2, characterized in that the lower faces of the core (3) and the strip (6) in contact with the lower skin (4) are locally coplanar at the core and metal strip junction.

4. A process according to claim 1, applied to a composite material structure of monolithic type, characterized in that the thickness between the lower skin (4) and the higher skin (5) varies continuously.

5. A process according to the claim 1, characterized in that the metal strip (6) is welded to an adjusting coaming (9) of hull (2).

## Patentansprüche

1. Montageverfahren auf einem metallischen Schiffsrumpf (2) von Superstrukturen aus Verbundstoff (1) vom Typ Sandwich oder monolithischen Typs, bestehend aus mehreren Faser-Harz-Schichten, davon zwei Endschichten, der sogenannten Unterhaut (4) und Oberhaut (5), dadurch gekennzeichnet, daß zwischen Unter- und Oberhaut (4, 5) über einen Teil seiner Breite ein Metallstreifen (6) eingefügt wird, der am nicht bedeckten Teil des metallischen Schiffsrumpfs (2) verschweißt wird.

2. Verfahren nach Anspruch 1 für Superstrukturen aus Verbundstoff vom Typ Sandwich mit zwischen einer Unterhaut (4) und einer Oberhaut (5) verklebter Füllung (3), dadurch gekennzeichnet, daß die Dicke der Füllung ununterbrochen ab ihrer Nenndicke bis zur Dicke des Metallstreifens schwankt.

3. Verfahren nach Anspruch 2, dadurch gekennzeichnet, daß die Unterseiten der Füllung (3) und des mit der Unterhaut (4) in Kontakt stehenden Streifens (6) örtlich an der Verbindung Füllung - Streifen koplanar sind.

4. Verfahren nach Anspruch 1 für Superstrukturen aus Verbundstoff monolithischen Typs, dadurch gekennzeichnet, daß die Dicke zwischen der Unterhaut (4) und der Oberhaut (5) ununterbrochen schwankt.

5. Verfahren nach Anspruch 1, dadurch gekennzeichnet, daß der Metallstreifen (6) an einem Süllrand (9) des Rumpfs (2) verschweißt wird.
